# EUROPEAN PATENT APPLICATION

(11) **EP 3 285 053 A1**
(43) Date of publication of application: **21.02.2018**
(21) Application number: 15889210.9
(22) Date of filing: 16.04.2015
(51) Int. Cl.: G01J 3/45

(54) **FOURIER TRANSFORM SPECTROPHOTOMETER**

(71) Applicant: Shimadzu Corporation, Kyoto-shi, Kyoto 604-8511 (JP)
(72) Inventor: KAMIKAKE, Tadafumi, Kyoto-shi Kyoto 604-8511 (JP)
(74) Representative: Webster, Jeremy Mark
(86) International application number: PCT/JP2015/061751
(87) International publication number: WO 2016/166872

(57) **Abstract**

Disclosed is a Fourier transform spectroscope having a control interferometer capable of facilitating optical axis adjustment and miniaturization by reducing the number of optical elements. Using a first reflection mirror 131 provided with a reflection surface 131a configured to reflect measurement light emitted from a measurement light source 110 toward a beam splitter 140 and a first through-hole 131b extending along an optical axis direction of the measurement light reflected on the reflection surface 131a and a laser light source holding portion configured to hold a laser light source 120 such that laser light emitted from the laser light source 120 is incident to the beam splitter 140 through the first through-hole 131b, optical axes of the measurement light and the laser light are aligned with each other. Since a laser reflection mirror for aligning the optical axes of the measurement light and the laser light of the related art is not necessary, it is possible to reduce the number of parts and facilitate optical axis adjustment and miniaturization.

## Description

### Technical Field

The present invention relates to a Fourier transform spectroscope.

### Background Art

In a Fourier transform infrared spectroscope (FTIR), infrared light from a infrared light source is split into two light beams using a beam splitter, so that one of the light beams is irradiated onto a fixed mirror, and the other light beam is irradiated onto a movable mirror. Then, their reflection light beams are guided into the same optical path to generate interference light. This interference light is irradiated onto a measurement target specimen, and its transmission light or reflection light is detected by a detector and is transmitted to a data processing apparatus as a detection signal. The data processing apparatus performs Fourier transform for the detection signal to generate a spectrum and performs a qualitative or quantitative analysis for the specimen on the basis of a peak wavelength, a peak intensity, and the like of this spectrum.

This FTIR is configured, for example, as illustrated in Fig. 4 (see Patent Document 1). Specifically, the FTIR has a main interferometer provided with an infrared light source 410, a condensing mirror 431a, a collimator mirror 431b, a beam splitter 440, a movable mirror 450, and a fixed mirror 460 and housed in an interferometer chamber 400. In the main interferometer, infrared light emitted from the infrared light source 410 passes through the condensing mirror 431a and the collimator mirror 431b and is split into two light beams by the beam splitter 440. One of the light beams is reflected on the fixed mirror 460, and the other light beam is reflected on the movable mirror 450, so that they are combined in the same optical path to form infrared interference light. This infrared interference light is condensed by a paraboloid mirror 432 and is incident to a specimen chamber 470. As this infrared interference light is irradiated onto the specimen S, it is absorbed in the specimen S at a specific wavelength. The absorbed infrared interference light passes through an ellipsoidal mirror 433 and is detected by an infrared light detector 480, so that Fourier transform is performed to generate the spectrum.

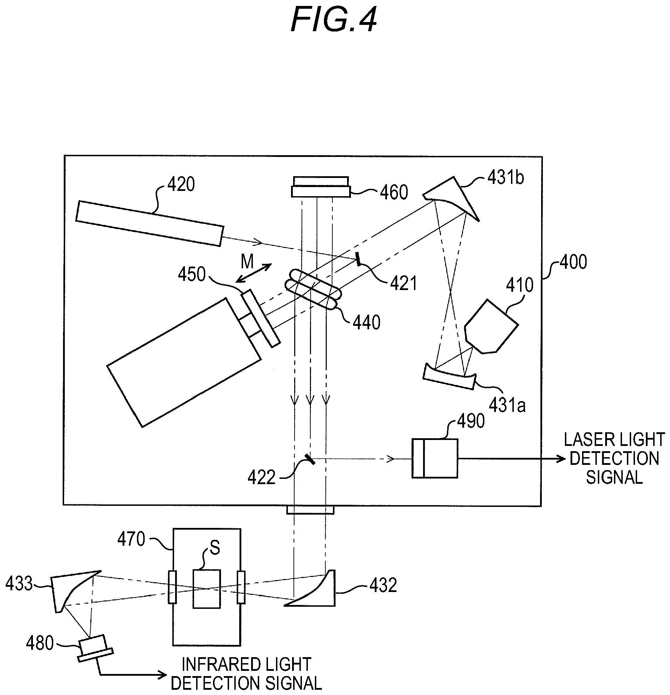

In this FTIR, it is possible to obtain the aforementioned spectrum with high accuracy by constantly maintaining a movement velocity of the movable mirror 450. A control interferometer of Fig. 4 is employed to measure the movement velocity of the movable mirror 450. The control interferometer includes a laser light source 420, first and second laser reflection mirrors 421 and 422, a beam splitter 440, a movable mirror 450, and a fixed mirror 460. In the control interferometer, the laser light emitted from the laser light source 420 is introduced into the same optical path as that of the infrared light by a first laser light reflection mirror 421 and passes through the same interferometer (including the beam splitter 440, the movable mirror 450, and the fixed mirror 460) as that of the infrared light to generate the laser interference light. This laser interference light is extracted from the optical path of the infrared interference light by the second laser reflection mirror 422 and is detected by the laser light detector 490. The movement velocity of the movable mirror 450 is calculated on the basis of the detected laser interference light.

### Citation List

### Patent Document

Patent Document 1: JP-A-2012-007964
Patent Document 2: JP-T-2005-521893 (the term "JP-T" as used herein means a published Japanese translation of a PCT patent application)

### Summary of the Invention

### Technical Problem

Out of optical elements of the control interferometer, the beam splitter 440, the movable mirror 450, and the fixed mirror 460 are shared with the main interferometer. Meanwhile, the first and second laser light reflection mirrors 421 and 422 are optical elements not provided in the main interferometer. Therefore, in order to obtain positional information of the movable mirror 450 using the control interferometer of Fig. 4, it is necessary to add such a reflection mirror in addition to the configuration of the main interferometer. However, since the number of optical elements increases, an apparatus size increases, and a labor in the optical axis adjustment increases disadvantageously. Furthermore, a member for fixing the reflection mirror may block a part of the infrared light path disadvantageously.

In view of the aforementioned problems, an object of the invention is to provide a Fourier transform spectroscope having a control interferometer, capable of facilitating optical axis adjustment and miniaturization by reducing the number of optical elements.

### Solution to Problem

In order to address the aforementioned problems, according to a first aspect of the invention, there is provided a Fourier transform spectroscope including: a main interferometer provided with a measurement light source, a beam splitter, a movable mirror, and a fixed mirror to generate interference light of measurement light; a laser light source; a control interferometer provided with the beam splitter, the movable mirror, and the fixed mirror to generate laser interference light; a) a first reflection mirror having a reflection surface configured to reflect measurement light emitted from the measurement light source toward the beam splitter, and a first through-hole extending along an optical axis of the measurement light reflected on the reflection surface; and b) a laser light source holding portion configured to hold the laser light source such that laser light emitted from the laser light source is incident to the beam splitter through the first through-hole.

According to a second aspect of the invention, there is provided a Fourier transform spectroscope including: a main interferometer provided with a measurement light source, a beam splitter, a movable mirror, and a fixed mirror to generate interference light of measurement light; a laser light source; a control interferometer provided with the beam splitter, the movable mirror, and the fixed mirror to generate laser interference light; a laser light detector configured to detect the laser interference light; a measurement light detector configured to detect the interference light of the measurement light; a) a second reflection mirror having a reflection surface on which interference light of the measurement light obtained by combining the measurement light reflected by the movable mirror and the measurement light reflected by the fixed mirror using the beam splitter is reflected toward the measurement light detector, and a second through-hole through which laser interference light going to the reflection surface from the beam splitter along with the interference light of the measurement light passes; and b) a laser detector holding portion configured to hold the laser light detector such that the laser interference light passing through the second through-hole is incident to the laser light detector.

In the Fourier transform spectroscope according to first and second aspect of the invention, an infrared light source, a visible light source, an ultraviolet light source, and the like may be employed as the measurement light source. In addition, the first and second reflection mirrors may be a planar mirror, a collimator mirror for collimating the measurement light, a condensing mirror, or the like.

In the Fourier transform spectroscope having the main interferometer and the control interferometer that share the beam splitter, the movable mirror, and the fixed mirror, a laser light reflection mirror is arranged on the optical path of the measurement light, so that the laser light is introduced into the optical path of the measurement light by the reflection mirror, or the laser interference light is extracted from the optical path of the interference light of the measurement light. In comparison, according to the first aspect, the first through-hole is formed in the first reflection mirror for reflecting the measurement light from the measurement light source toward the beam splitter, so that the laser light is introduced into the optical path of the measurement light through this through-hole and is incident to the beam splitter along with the measurement light. Therefore, according to the first aspect, the laser light from the laser light source can be introduced into the optical path of the measurement light without installing the laser light reflection light.

According to the second aspect, the second through-hole is formed in the second reflection mirror for reflecting the interference light of the measurement light toward the measurement light detector, and, through this through-hole, the laser interference light is separated from the interference light of the measurement light and is incident to the laser light detector. Therefore, according to the second aspect, the laser interference light can be separated from the optical path of the interference light of the measurement light and can be detected by the laser detector without installing the laser reflection mirror.

According to the third aspect, the Fourier transform spectroscope includes elements according to the first aspect such as the first reflection mirror, the first through-hole, and the light source holding portion, and elements according to the second aspect such as the second reflection mirror, the second through-hole, and the laser detector holding portion. In this configuration, the measurement light and the laser light are incident to the first reflection mirror and the first through-hole, respectively, so that they are incident to the beam splitter while optical axes of the measurement light and the laser light are aligned with each other. Then, the laser interference light and the interference light of the measurement light are generated by the beam splitter, the fixed mirror, and the movable mirror, and are incident to the second reflection mirror and the second through-hole, respectively. Therefore, the laser interference light and the interference light of the measurement light are separated from each other, and are incident to the laser detector and the measurement light detector, respectively.

### Advantageous Effects of the Invention

In the Fourier transform spectroscope according to the invention, at least one of the reflection mirror for introducing the laser light from the laser light source used in the related art into the optical path of the measurement light, and the reflection mirror for separating the laser interference light from the interference light of the measurement light becomes unnecessary. Therefore, the number of the operated optical elements is reduced. In addition, as the number of the optical elements is reduced, the Fourier transform spectroscope can be miniaturized. Since the number of the optical elements is reduced, a labor for adjusting the optical axis is reduced, so that optical axis adjustment is facilitated.

### Brief Description of the Drawings

Fig. 1 is a schematic diagram illustrating an FTIR according to an embodiment of the invention.
Fig. 2 is a schematic diagram illustrating the FTIR merely provided with a first reflection mirror of the invention and a laser light source holding portion.
Fig. 3 is a schematic diagram illustrating FTIR merely provided with a second reflection mirror of the invention and a laser light detector holding portion.
Fig. 4 is a schematic diagram illustrating the FTIR of the related art.

### Mode for Carrying Out the Invention

Embodiments of the invention will now be described with reference to the accompanying drawings.

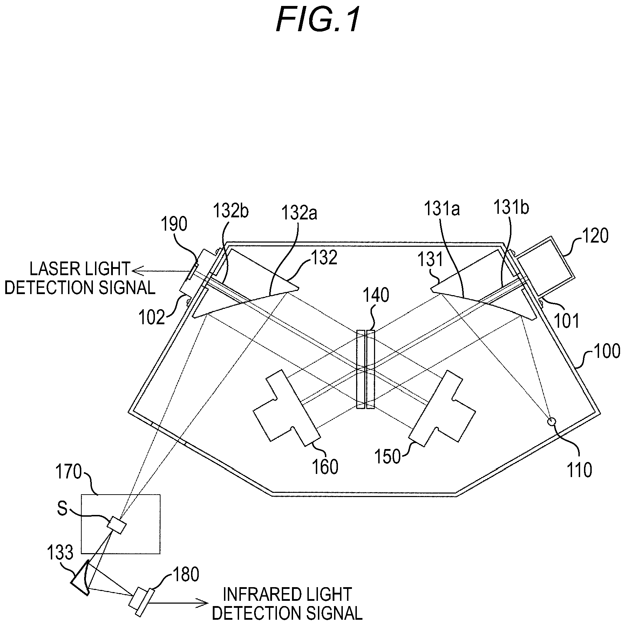

Fig. 1 is a schematic diagram illustrating a Fourier transform infrared spectroscope (FTIR) according to an embodiment of the invention. Note that like reference numerals denote like elements as in Fig. 4, and they will not be described repeatedly.

Similar to the FTIR of Fig. 4, this FTIR includes an infrared light source 110, a collimator mirror 131, a beam splitter 140, a movable mirror 150, a fixed mirror 160, and a paraboloid mirror 132 housed in an interferometer chamber 100. In addition, the FTIR has a specimen chamber 170 where a specimen S is housed and an infrared light detector 180 outside the interferometer chamber 100. However, the first and second laser light reflection mirrors 421 and 422 of the related art are not provided. In addition, the laser light source 120 is installed in the outer side of a casing of the interferometer chamber 100 using a laser light source holding portion 101 such as a screw or an installation jig. Furthermore, the laser light detector 190 is also installed in the outer side of the casing of the interferometer chamber 100 using a laser light detector holding portion 102 such as a screw or an installation jig.

The collimator mirror 131 has a first reflection surface 131a having a paraboloid shape and a first through-hole 131b. The first reflection surface 131a makes the light incident from the infrared light source 110 into parallel light incident to the beam splitter 140. The first through-hole 131b has a circular cross-sectional shape and a diameter twice a beam width of the laser light emitted from the laser light source 120. One of the openings of the first through-hole 131b is provided in the center of the first reflection surface 131a, and the other opening is provided in an end surface separate from the first reflection surface 131a of the collimator mirror 131. The opening of this end surface faces a laser light emission portion of the laser light source 120 by interposing a laser light transmission window installed in the casing of the interferometer chamber 100. In addition, the first through-hole 131b is formed to extend along an optical axis direction of the infrared light reflected on the first reflection surface 131a.

The paraboloid mirror 132 has a second reflection surface 132a on a paraboloid surface and a second through-hole 132b. The second reflection surface 132a condenses the infrared interference light incident from the beam splitter 140 on the specimen S. The second through-hole 132b has a circular cross-sectional shape and a diameter twice a beam width of the laser light emitted from the laser light source 120. One of the openings of the second through-hole 132b is provided in the center of the second reflection surface 132a, and the other opening is provided in an end surface separate from the second reflection surface 132a of the paraboloid mirror 132. The opening of this end surface faces a light-receiving surface of the laser light detector 190 by interposing the laser light transmission window installed in the casing of the interferometer chamber 100. Furthermore, the second through-hole 132b is formed to extend along an optical axis direction of the infrared interference light reflected on the second reflection surface 132a. The paraboloid mirror 132 is arranged such that laser interference light incident from the beam splitter 140 passes through the second through-hole 132b.

Operations of the FTIR according to this embodiment will be described with reference to Fig. 1. The infrared light emitted from the infrared light source 110 is reflected on the first reflection surface 131a of the collimator mirror 131 into parallel light, and the parallel light is incident to the beam splitter 140. Meanwhile, the laser light emitted from the laser light source 120 passes through the first through-hole 131b and is incident to the beam splitter 140. In this case, since the first through-hole 131b extends along the optical axis direction of the infrared light reflected on the first reflection surface 131a, the optical axis of the laser light passing through the first through-hole 131b is aligned with the optical axis of the infrared light.

The laser light and the infrared light having optical axes aligned with each other are incident to the beam splitter 140 and are reflected on the movable mirror 150 and the fixed mirror 160 so as to be converted into laser interference light and infrared interference light, respectively. Both the laser interference light and the infrared interference light are incident to the paraboloid mirror 132 while their optical axes are aligned with each other.

As the infrared interference light is incident to the second reflection surface 132a of the paraboloid mirror 132, this infrared interference light is reflected toward the infrared light detector 180 and is irradiated onto the specimen S of the specimen chamber 170 provided in its optical path so as to be absorbed in the specimen S at a specific wavelength. The absorbed infrared interference light passes through a detector ellipsoidal mirror 133 and is detected by the infrared light detector 180.

The laser interference light incident to the paraboloid mirror 132 passes through the second through-hole 132b and is incident to the laser light detector 190. Here, the infrared interference light is reflected on the second reflection surface 132a, and only the laser interference light passes through the second through-hole 132b. In this manner, the infrared interference light and the laser interference light are divided by the paraboloid mirror 132. This laser interference light is detected by the laser light detector 190.

While the Fourier transform infrared spectroscope according to an embodiment of the invention has been described, various changes or modification may be possible within the spirit and scope of the invention.

For example, although the laser light source 120 is installed in the outer side of the casing of the interferometer chamber 100 in the aforementioned embodiment, the interferometer chamber 100 may be installed in the inner side. In this case, the first through-hole 131b faces a laser emission portion of the laser light source 120 without passing through the laser light transmission window provided in the casing of the interferometer chamber 100. In addition, the laser light source holding portion 101 may be provided far from the casing inside or outside the interferometer chamber 100 to dispose the laser light source 120. Similar to the laser light source 120, the laser light detector 190 may be provided in the inner side of the interferometer chamber 100 or may be provided far from the casing inside or outside the interferometer chamber 100.

In a case where the laser light source 120 is provided outside of the casing of the interferometer chamber 100, it is possible to suppress an increase of the temperature of the laser light source 120. Typically, a He-Ne laser, a vertical cavity surface emitting laser (VCSEL), or the like is employed as the laser light source of the FTIR. In a case where such a laser light source is provided inside of the interferometer chamber, a temperature of the interferometer chamber increases by the heat emitted from the infrared light source in addition to the heat of the laser light source itself, so that the output power of the laser light source changes. In particular, in a case where the VCSEL is employed as the laser light source, as described in Patent Document 2, the temperature of the laser light source increases, so that the output frequency of the laser light source changes. This may make it difficult to stably perform the analysis of the specimen.

In comparison, in the aforementioned embodiment, the laser light source 120 is provided outside of the interferometer chamber 100. Therefore, it is possible to externally dissipate the heat of the laser light source. In addition, there is nearly no influence from the heat generated from other apparatuses such as the infrared light source 110. Furthermore, by inserting a spacer formed of a material having high heat resistance into a gap between the laser light source 120 and the casing, it is possible to suppress an influence on the laser light source 120 even when the temperature of the interferometer chamber 100 increases.

In the aforementioned embodiment, the laser light source holding portion 101 is used to fix the laser light source 120 to the casing of the interferometer chamber 100. However, a mechanism for adjusting the optical axis of the laser light source 120 may be provided additionally. In this configuration, it is possible to accurately adjust the optical axis of the laser light source 120 after the laser light source 120 is installed in the casing of the interferometer chamber 100. Therefore, it is possible to perform the optical axis adjustment with higher accuracy.

In the aforementioned embodiment, the first and second through-holes have a circular cross-sectional shape. However, the first and second through-holes may have rectangular or other polygonal shapes as long as the laser light can straightly pass therethrough. In addition, although the through-holes have a diameter twice the beam width of the laser light in the aforementioned embodiment, the diameter of the through-hole may be larger or smaller than the beam width. However, as the diameter of the through-hole increases, the areas of the first and second reflection surfaces are reduced, so that the amount of infrared light reflected on the reflection surfaces is reduced. Therefore, the diameters of the through-holes are preferably smaller as long as the interference state of the laser light can be detected by the laser light detector. Furthermore, although the through-holes are provided in the centers of the first and second reflection mirrors in the aforementioned embodiment, they may be provided in any other position.

Although the infrared light source 110 is provided inside of the interferometer chamber 100 in the aforementioned embodiment, the infrared light source 110 may be provided outside of the interferometer chamber 100. In this case, an opening for allowing the infrared light to be incident to the interferometer chamber 100 is provided in the casing of the interferometer chamber 100. By providing this opening with a window for allowing infrared light to pass, it is possible to maintain airtightness of the interferometer chamber 100.

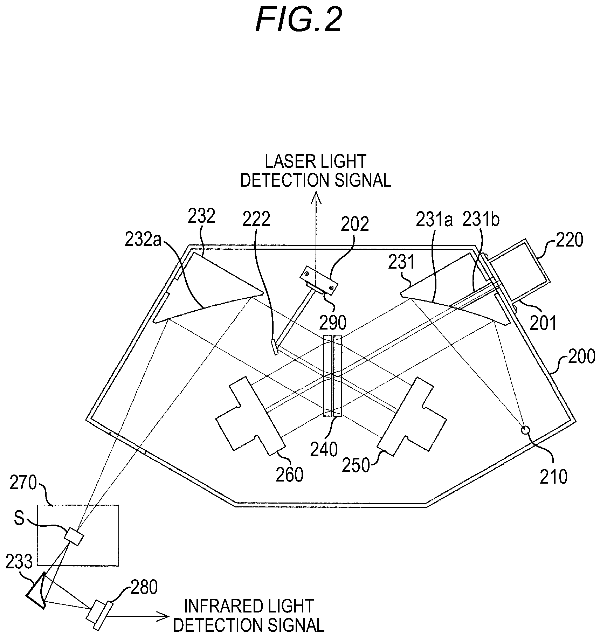

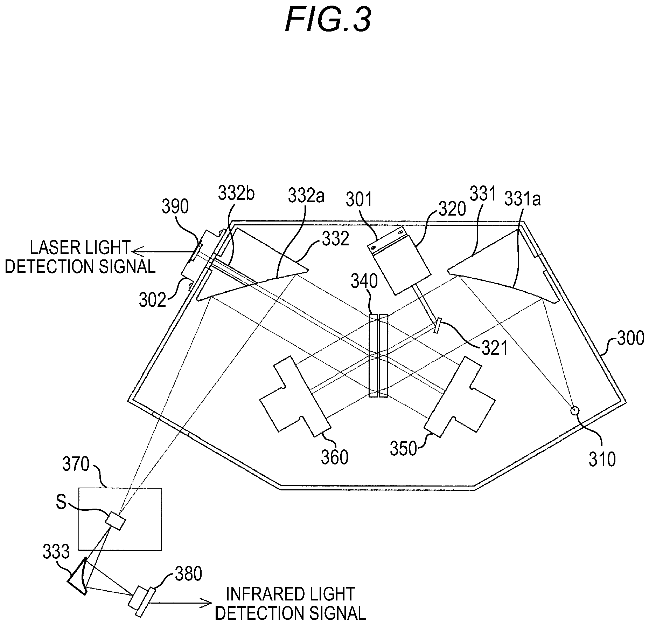

In the aforementioned embodiment, both the elements according to the first aspect of the invention such as the first reflection mirror and the laser light source holding portion and the element according to the second aspect such as the second reflection mirror and the laser light detector holding portion are employed. Alternatively, as illustrated in Figs. 2 and 3, any one of the elements according to the first or second aspect of the invention may be employed.

In the FTIR of Fig. 2, the optical axes of the laser light and the infrared light are aligned with each other using the elements according to the first aspect of the invention such as the first reflection mirror and the laser light source holding portion, and the laser interference light and the infrared interference light are divided using the second laser reflection mirror of the related. In this configuration, similar to the embodiment described above, the infrared light and the laser light emitted from the infrared light source 210 and the laser light source 220, respectively, are incident to the beam splitter 240 while their optical axes are aligned with each other using the laser light source holding portion 201 that holds the first reflection surface 231a, the first through-hole 231b, and the laser light source 220.

Then, the laser light and the infrared light incident to the beam splitter 240 are converted into the laser interference light and the infrared interference light through the beam splitter 240, the movable mirror 250, and the fixed mirror 260. The infrared interference light is irradiated toward the infrared light detector 280 by the paraboloid mirror 232, and similar to the related art, an orientation of the optical axis of the laser interference light is changed toward the laser light detector 290 by the second laser reflection mirror 222, so that each light beam can be divided.

In the FTIR of Fig. 3, the optical axes of the laser light and the infrared light are aligned with each other using the first laser reflection mirror of the related art, and the laser interference light and the infrared interference light are separated using the elements according to the second aspect of the invention such as the second reflection mirror and the laser light detector holding portion 202. In this configuration, the infrared light emitted from the infrared light source 310 is reflected on the collimator mirror 331 and is incident to the beam splitter 340. Similar to the related art, the laser light emitted from the laser light source 320 is reflected to the first laser reflection mirror 321, so that its optical axis is aligned with the optical axis of the infrared light reflected on the collimator mirror 331.

Then, the laser light and the infrared light incident to the beam splitter 340 are converted into the laser interference light and the infrared interference light, respectively, through the beam splitter 340, the movable mirror 350, and the fixed mirror 360. Similar to the aforementioned embodiment, both the laser interference light and the infrared interference light are separated by the second reflection surface 332a and the second through-hole 332b.

### Reference Signs List

100, 200, 300, 400 interferometer chamber
101, 201, 301 laser light source holding portion
102, 202, 302 laser light detector holding portion
110, 210, 310, 410 infrared light source
120, 220, 320, 420 laser light source
131, 231, 331, 431 collimator mirror
131a, 231a, 331a first reflection surface
131b, 231b first through-hole
132, 232, 332, 432 paraboloid mirror
132a, 232a, 332a second reflection surface
132b, 332b second through-hole
133, 233, 333, 433 detector ellipsoidal mirror
140, 240, 340, 440 beam splitter
150, 250, 350, 450 movable mirror
160, 260, 360, 460 fixed mirror
170, 270, 370, 470 specimen chamber
180, 280, 380, 480 infrared light detector
190, 290, 390, 490 laser light detector
421, 422 laser reflection mirror
S specimen

## Claims

1. A Fourier transform infrared spectroscope comprising:
a main interferometer provided with a measurement light source, a beam splitter, a movable mirror, and a fixed mirror to generate interference light of measurement light;
a laser light source;
a control interferometer provided with the beam splitter, the movable mirror, and the fixed mirror to generate laser interference light;
a) a first reflection mirror having
a reflection surface configured to reflect measurement light emitted from the measurement light source toward the beam splitter, and
a first through-hole extending along an optical axis of the measurement light reflected on the reflection surface; and
b) a laser light source holding portion configured to hold the laser light source such that laser light emitted from the laser light source is incident to the beam splitter through the first through-hole.

2. A Fourier transform infrared spectroscope comprising:
a main interferometer provided with a measurement light source, a beam splitter, a movable mirror, and a fixed mirror to generate interference light of measurement light;
a laser light source;
a control interferometer provided with the beam splitter, the movable mirror, and the fixed mirror to generate laser interference light;
a laser light detector configured to detect the laser interference light;
a measurement light detector configured to detect the interference light of the measurement light;
a) a second reflection mirror having
a reflection surface on which interference light of the measurement light obtained by combining the measurement light reflected by the movable mirror and the measurement light reflected by the fixed mirror using the beam splitter is reflected toward the measurement light detector, and
a second through-hole through which laser interference light going to the reflection surface from the beam splitter along with the interference light of the measurement light passes; and
b) a laser detector holding portion configured to hold the laser light detector such that the laser interference light passing through the second through-hole is incident to the laser light detector.

3. The Fourier transform infrared spectroscope according to claim 2, further comprising:
c) a first reflection mirror having
a reflection surface configured to reflect the measurement light emitted from the measurement light source toward the beam splitter, and
a first through-hole extending along an optical axis of the measurement light reflected on the reflection surface; and
d) a laser light source holding portion configured to hold the laser light source such that laser light emitted from the laser light source is incident to the beam splitter through the first through-hole.
